# EUROPÄISCHE PATENTSCHRIFT

(11) **EP 0 638 521 B1**
(45) Veröffentlichungstag und Bekanntmachung des Hinweises auf die Patenterteilung: **06.08.1997**
(21) Anmeldenummer: 94109775.0
(22) Anmeldetag: 24.06.1994
(51) Int. Cl.: C02F 1/38, C02F 11/12, B04B 1/20, F26B 5/08, F26B 7/00

(54) **Entwässerungsvorrichtung zum Entwässern von Schlämmen**
Device for draining of sludge
Dispositif pour la déshydratation de boues de curage

(30) Priorität: 06.08.1993 DE 4326410
(43) Veröffentlichungstag der Anmeldung: 15.02.1995
(73) Patentinhaber: DEUTZ Aktiengesellschaft, 51063 Köln (DE)
(72) Erfinder: Schilp, Reinhold, Dr.-Ing., D-82237 Worthsee (DE); Epper, Wolfgang, Dipl.-Ing., D-50126 Bergheim (DE)

(56) Entgegenhaltungen:
- EP-A- 0 173 676
- EP-A- 0 176 943
- WO-A-93/00562
- DE-A- 2 718 673
- DE-A- 4 238 568
- GB-A- 2 088 255

## Beschreibung

Die Erfindung ist auf eine Entwässerungsvorrichtung gerichtet zum Entwässern von Schlämmen mit einer Vollmantel-Zentrifuge, vorzugsweise einer Vollmantel-Schneckenzentrifuge, zum Trennen eines schlammförmigen Feststoff-Flüssigkeits-Gemisches zu einem Dickstoff mit einem Restwasseranteil im Bereich von etwa 60 Gew.-% bis etwa 85 Gew.-%, mit einem Einlaß für die Zuführung des schlammförmigen Feststoff-Flüssigkeits-Gemisches und mit mindestens jeweils einem Auslaß für die abgetrennte Flüssigkeit und den abgetrennten Dickstoff, wobei die Dickstoffabwurfzone er Zentrifuge das Dispersionsorgan eines Zerstäubungstrockners bildet, mit Mittel zum Ablenken der Flugbahn der in dispergierter Form als Partikelschleier radial abgeschleuderten Dickstoffpartikel in Achsrichtung der Vollmantel-Zentrifugen.

Eine derartige Entwässerungsvorrichtung ist aus der PCT/EP 92/01426 (WO-A-93 00562) bekannt.

In dieser bekannten Entwässerungsvorrichtung werden die mit hoher Geschwindigkeit (bis 100 m/s) am Auswurf der Vollmantel-Zentrifuge radial abgespritzten Dickstoffpartikel (Größe etwa 0,1 bis 1 mm) in Achsrichtung der Zentrifuge (die mit einem feststehenden Gehäuse umgeben ist) durch geeignete Mittel, beispielsweise Umlenkbleche, umgelenkt und auf einer spiralförmigen Flugbahn in den zwischen dem feststehenden Gehäuse und dem rotierenden Trommelmantel gebildeten freien Raum geführt, dabei mit hoher Geschwindigkeit von Trocknungsgas umspült und dabei zumindest oberflächlich getrocknet wird.

Der im Trocknungsgas dispergierte Dickstoff kann auf seinem Weg zum Austritt aus der Entwässerungsvorrichtung durch das feststehende Gehäuse eine Mahlzone passieren, in welcher gebildete Agglomerate wieder zerkleinert und aufgerissen werden. Hierdurch werden Anlagerungen von Dickstoffpartikeln an den Wänden des Gehäuses weitgehend verhindert.

Es hat sich nun jedoch gezeigt, daß trotz der Zerkleinerung der Agglomerate am rotierenden Trommelmantel der Zentrifuge Anlagerungen von Dickstoffpartikeln entstehen, die entweder irgendwann vom Trommelmantel wieder abfallen und dann aufgrund ihrer Größe zu Störungen bei nachfolgenden Verfahrensschritten bei der Weiterbehandlung der Dickstoffpartikel führen oder aber sie bleiben am Trommelmantel haften, vergrößern sich ständig und führen auf diese Weise zu Störungen bei der Entwässerung (Unwucht des Zentrifugentrommelmantels, Veränderung der Flugbahn der mit dem Dickstoff beladenen Trocknungsgase).

Ein weiterer möglicher Nachteil kann sich durch die Rotation der Zentrifugentrommel ergeben, da durch diese Rotation sich die Strömungsverhältnisse innerhalb des in einer spiralförmigen Flugbahn umlaufenden Trocknungsgases beeinflußt werden, insbesondere im Hinblick auf eine homogene Verteilung der Dickstoffpartikel im Trocknungsgas und einer damit verbundenen gleichmäßigen Trocknung.

Schließlich könnte ein Nachteil darin bestehen, daß die heißen Trocknungsgase direkten Kontakt mit der Zentrifugentrommel haben und diese dadurch unerwünscht aufgeheizt wird.

Es ist Aufgabe der Erfindung, die bekannte Entwässerungsvorrichtung der genannten Art so weiterzubilden, das bei Betrieb der Entwässerungsvorrichtung die genannten nachteiligen Betriebszustände nicht mehr auftreten.

Die gestellte Aufgabe wird gelöst mit den Maßnahmen des Kennzeichnungsteils des Anspruchs 1. Vorteilhafte Ausgestaltungen der Erfindung sind in den Unteransprüchen angegeben.

Durch die erfindungsgemäße Anordnung eines feststehenden Mantels um die drehbewegliche Zentrifugentrommel, der der Kontur der Zentrifugentrommel folgt, also auch im konischen Bereich der Zentrifugentrommel konisch verläuft, werden die mit den Dickstoffpartikeln beladenen Trocknungsgase nicht mehr wie bei der bekannten Entwässerungsvorrichtung in einer spiralförmigen Flugbahn um den Zentrifugentrommelmantel geführt, sondern um den feststehenden Mantel. Die Dickstoffpartikel kommen nicht mehr zu einem Kontakt mit dem Zentrifugentrommelmantel, die Gefahr einer Anlagerung von Dickstoffpartikel auf dem Trommelmantel besteht somit nicht mehr, und auch die unerwünschte Beeinflussung der Strömungsverhältnisse innerhalb der Trocknungsgase findet nicht mehr statt. Weiterhin bildet der Mantel fast über die gesamte Länge der Zentrifugentrommel einen wirksamen Schutz gegenüber einer unerwünschten Aufheizung der Zentrifugentrommel durch die Trocknungsgase.

Weitere Einzelheiten, Vorteile und Merkmale der Erfindung werden an einem Ausführungsbeispiel anhand schematischer Zeichnungsfiguren näher erläutert.

Es zeigen
- Fig. 1:: eine Entwässerungsvorrichtung in Längsschnitt (teilweise);
- Fig. 2:: einen Schnitt entsprechend II-II der Fig. 1.

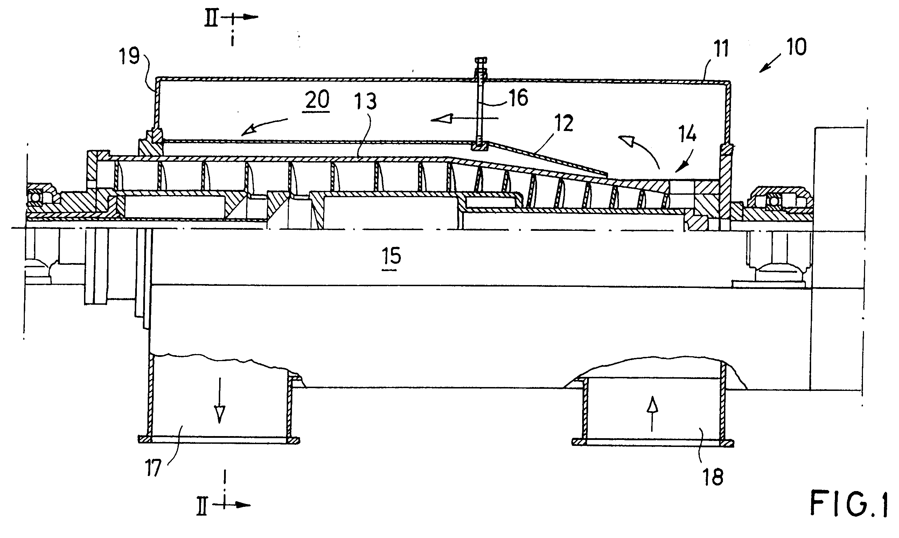

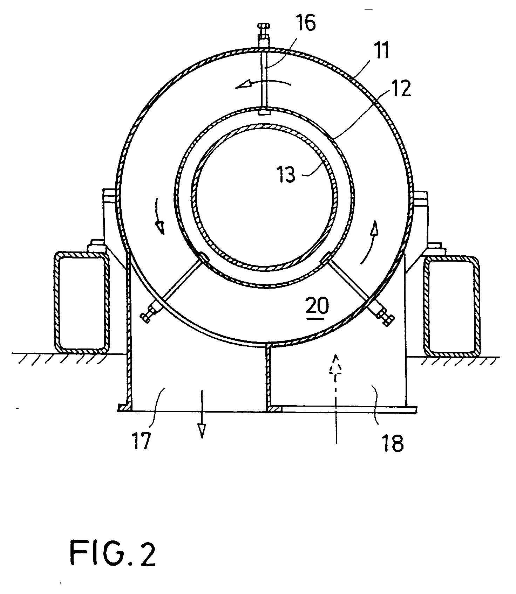

Die in der Fig. 1 und 2 dargestellte Entwässerungsvorrichtung (10) besteht aus einer Zentrifuge, im dargestellten Ausführungsbeispiels aus einer Schneckenzentrifuge (15), die von einem Gehäuse (11) eines Zerstäubungstrockners eingeschlossen ist. Unmittelbar um die Zentrifugentrommel (13) ist ein Mantel (12) angeordnet, der der Kontur der Zentrifugentrommel (13) folgend mit Abstand vor dem Dickstoffaustragsbereich (14) endet. Dieser Mantel (12) ist an der rückwärtigen Stirnwand (19) des Trocknergehäuses (11) befestigt und wird in seinem vorderen Mittelteil über Mittel (16) am Trocknergehäuse (11) mit Abstand abgestützt.

Trocknergehäuse (11) und Mantel (12) bilden somit einen um die Zentrifugentrommel (13) umlaufenden Ringkanal (20), durch den die mit den Dickstoffpartikeln beladenen Trocknungsgase in einer spiralförmigen Flugbahn geleitet werden. Hierzu wird im Betrieb der Entwässerungsvorrichtung (10) das Trocknungsgas durch den Gaseintrittsstutzen (18) tangential zugeführt, es folgt die in der PCT/EP 92/01426 WO-A-93 00562 beschriebene Umlenkung der radial aus der Zentrifuge ausgetragenen Dickstoffpartikeln in eine dem Ringkanal (20) folgende spiralförmige Flugbahn mit gleichzeitiger Vermischung der Dickstoffpartikel mit dem Trocknungsgas, und am Ende der Zentrifuge (15) [in der Zeichnungsfigur 1 links] ein tangentialer Austrag des Trocknungsgases mit den getrockneten Dickstoffpartikeln durch den Austragsstutzen (17).

## Patentansprüche

1. Entwässerrungsvorrichtung zum Entwässern von Schlämmen miteiner Vollmantel-Zentrifuge, vorzugsweise einer Vollmantel-Schneckenzentrifuge, zum Trennen eines schlammförmigen Feststoff-Flüssigkeits-Gemisches zu einem Dickstoff mit einem Restwasserantiel im Bereich von etwa 60 Gew.-% bis etwa 85 Gew.-%, mit einem Einlaß für die Zuführung des schlammförmigen Feststoff-Flüssigkeits-Gemisches und mit mindestens jeweils einem Auslaß für die abgetrennte Flüssigkeit und den abgetrennten Dickstoff, wobei die Dickstoffabwurfzone der Zentrifuge das Dispersionsorgan eines Zerstäubungstrockners bildet, dessen feststehendes Trocknergehäuse die Zentrifugentrommel umschließt, mit Mittel zum Ablenken der Flugbahn der in dispergierter form als Partikelschleier radial abgeschleuderten Dickstoffpartikel in Achsrichtung er Vollmantel-Zentrifugen, dadurch gekennzeichnet, daß innerhalb des feststehenden Trocknergehäuses (11) der Zentrifugentrommelmantel (13) von einem feststehenden Mantel (12)umschlossen wird, der mit Abstand vor der Dickstoffabwurfzone (14) der Zentrifuge (15) endet und der mit dem Trocknergehäuse (11) einen Ringkanal (20) bildet, durch den die von der Zentrifuge abgeschleuderten Dickstoffpartikel mit den Trocknungsgasen geführt werden.

2. Entwässerungsvorrichtung (10) nach Anspruch 1, dadurch gekennzeichnet, daß der Mantel (12) mit einem rückseitigen Enge an der rückseitigen Stirnwand (19) des Trocknergehäuses (11) befestigt ist und der vordere Mittelteil des Mantels (12) über Mittel (16) am Trocknergehäuse (11) mit Abstand abgestützt ist.

## Claims

1. A drainage device for removing water from sludge, by means of a full-cylinder centrifuge, preferably a full-cylinder helical conveyor centrifuge, for the separation of a sludge-like solid-liquid mixture to yield a slurry with a residual water component in the range of approximately 60% by weight to approximately 85% by weight, with an inlet for the feed of the sludge-like solid-liquid mixture and with at least one outlet for the separated liquid and one outlet for the separated slurry, wherein the slurry discharge zone of the centrifuge is the dispersion organ of a spray drier, with means to divert the flight path of the radially-ejected slurry particles, in dispersed form as streams of particles, in the axial direction of the full-cylinder centrifuge, characterised in that within the fixed drier housing (11) the centrifuge cylinder jacket (13) is enveloped by a fixed jacket (12) which terminates at a distance from the slurry discharge zone (14) of the centrifuge (15) and forms an annular channel (20) with the drier housing (11) through which the slurry particles spun off by the centrifuge are channelled with the drying gases.

2. A drainage device (10) according to claim 1, characterised in that the jacket (12) is secured at its rear end to the rear end wall (19) of the drier housing (11) and the front central section of the jacket (12) is braced via means (16) at a distance from the drier housing (11).

## Revendications

1. Dispositif pour la déshydratation de boues de curage avec une centrifugeuse à bol plein, de préférence une centrifugeuse à vis sans fin à bol plein, pour la séparation d'un mélange de liquide et de solide sous forme de boue en une matière consistante et épaisse avec une proportion d'eau résiduelle à environ 60 % en poids jusqu'à environ 85 % en poids, avec une admission pour l'amenée du mélange de liquide et de solide et avec au moins respectivement une sortie pour le liquide séparé et la matière épaisse constituant l'organe de dispersion d'un sécheur par pulvérisation, dont le boîtier fixe entoure le panier de la centrifugeuse, avec des moyens pour dévier la trajectoire des particules de matière épaisse lancées radialement sous forme dispersée comme un voile de particules dans le sens de l'axe de la centrifugeuse à bol plein,
caractérisé en ce qu'
à l'intérieur du boîtier du sécheur fixe (11), l'enveloppe du panier de la centrifugeuse (13) est entourée d'une enveloppe fixe (12), qui se termine à une certaine distance en avant de la zone de vidage de la matière consistante (14) de la centrifugeuse (15) et qui forme avec le boîtier du sécheur (11) un canal annulaire (20), à travers lequel les particules de matière consistante dispersées par la centrifugeuse sont guidées par les gaz de séchage.

2. Dispositif pour la déshydratation (10) selon la revendication 1,
caractérisé en ce que
l'enveloppe (12) est fixée par son extrémité arrière à la paroi frontale arrière (19) du boîtier du sécheur (11) et la partie centrale avant de l'enveloppe (12) est supportée à une certaine distance par des moyens (16) accrochés au boîtier du sécheur (11).
